# FASCICULE DE BREVET EUROPEEN

(11) **EP 0 412 017 B1**
(45) Date de publication et mention de la délivrance du brevet: **24.11.1993**
(21) Numéro de dépôt: 90402230.8
(22) Date de dépôt: 03.08.1990
(51) Int. Cl.: F02D 41/36

(54) **Procédé et dispositif de détection pour le système d'injection électronique d'un moteur multicylindre**
Detektionsverfahren und Vorrichtung für das elektronische Einspritzsystem einer Mehrzylinderbrennkraftmaschine
Detection method and device for the electronic injection system of an internal combustion engine with multicylinders

(30) Priorité: 03.08.1989 FR 8910488
(43) Date de publication de la demande: 06.02.1991
(73) Titulaire: RENAULT VEHICULES INDUSTRIELS Société dite:, 69003 Lyon (FR)
(72) Inventeur: Drutel, Yves, F-69530 Brignais (FR); Ranc, Denis, F-69800 Saint Priest (FR)
(74) Mandataire: Ernst-Schonberg, Michel

(56) Documents cités:
- DE-A- 3 709 092
- GB-A- 2 183 061
- US-A- 4 146 001
- US-A- 4 779 454

## Description

La présente invention concerne un procédé de détection de la position angulaire et de la vitesse angulaire de l'axe de rotation de la pompe à injection d'un moteur multicylindre.

La présente invention concerne également un dispositif de détection pour équiper le système d'injection d'un moteur multicylindre, en particulier d'un moteur de véhicule automobile, permettant de détecter la vitesse de rotation du moteur, d'effectuer en permanence un repérage angulaire des points morts hauts du moteur et de régler le calage statique de la pompe à injection du moteur.

Il est connu notamment par le document GB-A-2 183 061 d'opérer la détection de la position angulaire et de la vitesse angulaire de l'axe de rotation d'une pompe à injection d'un moteur multicylindre en mesurant les variations d'un champ magnétique générée par une couronne multipolaire rigide rendue solidaire de l'axe à l'aide d'un capteur sensible au champ magnétique monté fixe et disposé en regard du pourtour de la couronne.

Toutefois dans les systèmes existants, le calage statique d'une pompe à injection par rapport au moteur est effectué à l'aide d'un capteur spécifique différent du capteur de détection de vitesse et de repérage angulaire de point mort haut. De plus, la détection de vitesse et le repérage angulaire sont effectués à l'aide d'une variation de champ magnétique créée entre le capteur et une bague ferromagnétique dentée, la sensibilité de mesure, par cette technique, devient médiocre lorsque la vitesse de rotation du moteur est basse.

La présente invention a pour objet de remédier aux inconvénients des systèmes classiques en réalisant un dispositif de détection compact, de structure nouvelle.

Un autre objet de la présente invention est de réaliser un détecteur multifonction comportant une couronne magnétique multipolaire et un unique capteur sensible au champ magnétique, par exemple un capteur à effet Hall.

L'invention a également pour objet un procédé de détection de la position angulaire et de la vitesse angulaire de l'axe de rotation de la pompe à injection d'un moteur multicylindre à l'aide d'une couronne magnétique multipolaire et un unique capteur à effet Hall ou équivalent.

Le dispositif de détection, selon l'invention, permet d'équiper la pompe à injection d'un moteur multicylindre, tel qu'un moteur pour véhicule automobile, et est destiné notamment à mesurer la vitesse de rotation du moteur, à repérer angulairement le point mort haut correspondant à chaque cylindre du moteur et à effectuer un calage statique de la pompe à injection.

Selon l'invention, le dispositif comprend une couronne rigide montée à l'intérieur de la pompe et sur l'axe de rotation de la pompe; un capteur sensible au champ magnétique, tel qu'un capteur à effet Hall monté à l'intérieur de la pompe et en regard de la couronne; une interface électronique de traitement reliée d'une part au capteur et d'autre part à un calculateur de pilotage de l'injection électronique. La couronne rigide comporte circonférentiellement une pluralité de pôles magnétiques Nord et Sud répartis de façon alternée sur tout le pourtour de la couronne. Les pôles magnétiques sont regroupés en secteurs géométriquement identiques dont le nombre correspond au nombre de cylindres du moteur. Chaque secteur présente au moins deux petits pôles consécutifs de faible étendue angulaire et un grand pôle d'étendue angulaire plus importante à une extrémité.

Selon un mode de réalisation préféré de l'invention, tous les petits pôles magnétiques de la couronnes sont géométriquement identiques. Les grands pôles dont le nombre correspond au nombre de cylindres du moteur sont également géométriquement identiques et répartis de façon régulière sur le pourtour de la couronne.

Dans le cas où le moteur comporte un nombre pair de cylindres, chaque secteur de la couronne présente de préférence un nombre pair de petits pôles et un grand pôle. Lorsque le moteur comporte un nombre impair de cylindres, chaque secteur de la couronne présente de préférence un nombre impair de petits pôles et un grand pôle. De préférence, l'étendue angulaire d'un grand pôle magnétique est supérieure à une fois et demie l'étendue d'un petit pôle magnétique.

Le capteur à effet Hall peut comporter un élément sensible et un moyen électronique de mise en forme permettant de fournir d'une part un signal analogique proportionnel au champ magnétique généré par la couronne et d'autre part un signal numérique correspondant.

L'interface électronique de traitement peut comporter un monostable à front montant, un monostable à front descendant et une porte logique OU dont les entrées sont reliées aux monostables et dont la sortie délivre un signal de détection au calculateur de pilotage d'injection électronique, les monostables étant reliés à la sortie du signal numérique du capteur.

La couronne multipolaire logée à l'intérieur de la pompe à injection permet de réaliser un ensemble mécanique compact. L'unique capteur à effet Hall, coopérant avec la couronne multipolaire, permet non seulement de détecter la vitesse de rotation du moteur, de repérer angulairement les points morts hauts du moteur, mais également d'effectuer le calage statique de la pompe à injection par rapport au moteur sur lequel elle est fixée. Elle permet en outre de détecter une vitesse de rotation très basse du moteur, grâce aux changements de signe des pôles magnétiques de la couronne en mouvement.

Bien entendu, l'invention propose également un procédé de détection de la position angulaire et de la vitesse angulaire de l'axe de rotation d'une pompe à injection et de la vitesse angulaire de l'axe de rotation d'une pompe à injection pour un moteur multicylindre, grâce à une couronne multipolaire rendue solidaire de l'axe de la pompe et d'un capteur à effet Hall fixe et disposé en regard de la périphérie de la couronne comme défini pour le dispositif de détection de l'invention.

L'invention sera mieux comprise à l'étude de la description détaillée d'un mode de réalisation particulier de l'invention pris à titre d'exemple nullement limitatif et illustré par les dessins annexés, sur lesquels :

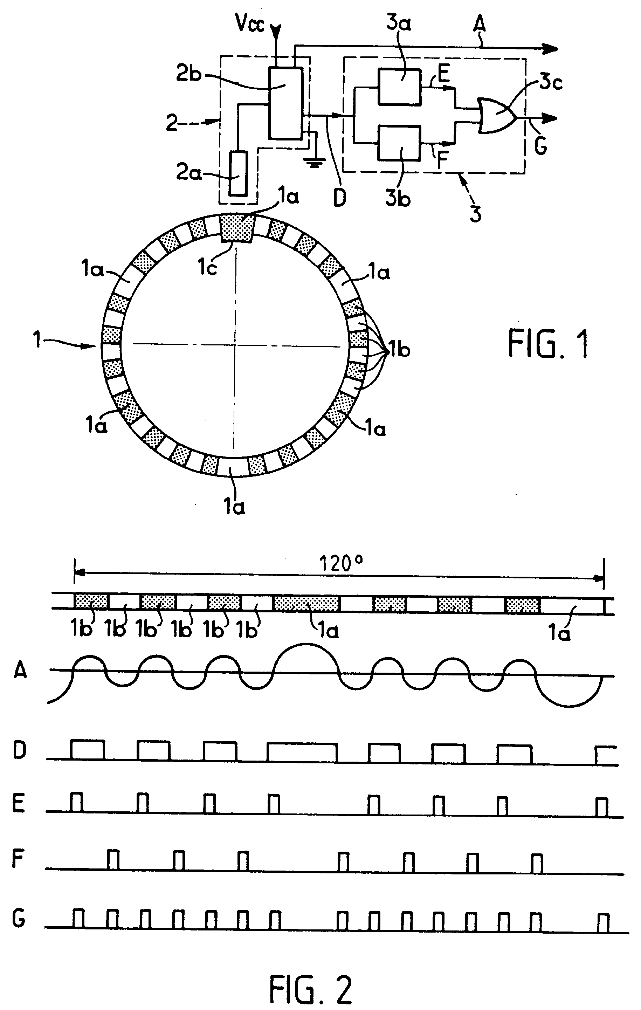

la figure 1 montre schématiquement le dispositif de l'invention pour un moteur à six cylindres; et
la figure 2 montre des signaux générés par le dispositif de la figure 1 correspondant à une rotation angulaire de 120° de la couronne multipolaire.

Tel qu'il est illustré sur la figure, le dispositif de l'invention comporte une couronne rigide multipolaire 1, un capteur à effet Hall 2 et une interface électronique de traitement 3.

La couronne multipolaire 1 est constituée, dans cet exemple pour un moteur à six cylindres, non représenté, de quarante deux pôles magnétiques alternés Nord (N)/Sud (S) répartis sur 360°. Elle se décompose en six secteurs de 60° constitués chacun de sept pôles magnétiques consécutifs alternativement N/S, le septième pôle magnétique la étant deux fois plus long que les six autres pôles magnétiques 1b.

Sur les figures, les pôles magnétiques Nord sont représentés par des zones sombres, et les pôles magnétiques Sud par les zones claires. Les grands pôles magnétiques la présentent chacun une étendue angulaire de 15° et sont uniformément répartis sur la couronne. Les petits pôles magnétiques 1b présentent chacun une étendue angulaire de 7,5° et sont groupés par nombre de six entre deux grands pôles la consécutifs.

La couronne 1 peut être réalisée en plastoferrite ou en d'autres matériaux rigides cmportant des pôles magnétiques alternés. Afin de pouvoir fixer la couronne 1 à l'intérieur de la pompe à injection, non représentée, le diamètre de la couronne réalisée est de l'ordre 40 mm. La couronne peut être fixée sur un disque qui est lui-même fixé sur l'axe de rotation, non représenté, de la pompe à injection. La protubérance radiale 1c sur la couronne 1 permet d'immobiliser angulairement la couronne par rapport à l'axe de rotation de la pompe à injection, d'une façon connue de l'homme du métier.

La pompe à injection est entraînée en rotation soit directement soit indirectement par le moteur. La vitesse de rotation de la couronne 1 est donc directement liée à la vitesse de rotation du moteur. Chaque secteur de 60° de la couronne 1 correspond à l'un des six cylindres du moteur.

Le capteur à effet Hall 2 est immobile et fixé en face de la couronne multipolaire 1. Il est constitué d'un élément sensible ou cellule Hall 2a et d'un moyen électronique de mise en forme 2b. Le moyen électronique 2b est alimenté par une tension en courant continu Vcc et délivre un signal analogique A et un signal numérique D lorsque la couronne multipolaire 1 est en mouvement.

Le capteur 2 permet de détecter le passage successif des différents pôles magnétiques lorsque la couronne mulitpolaire 1 est en rotation ou de déterminer la localisation précise des pôles magnétiques lorsque la couronne 1 est immmobile. Il en résulte une détection de la vitesse de rotation de la couronne 1 et un repérage angulaire des cylindres.

L'interface électronique de traitement 3 permet de transformer l'information électrique provenant du capteur 2 en impulsions nécessaires au calculateur de pilotage de l'injection électronique. L'entrée de l'interface 3 est connectée à la sortie du signal numérique D du capteur 2. Deux monostables 3a et 3b sont reliés électriquement en parallèle et reçoivent chacun le signal numérique D du capteur 2. Les monostables 3a et 3b constitutifs de l'interface 3 sont respectivement du type à front montant et du type à front descendant. Ils permettent de délivrer une impulsion positive calibrée à chaque référence angulaire présente dans le signal numérique D du capteur 2 correspondant au passage des frontières entre leurs pôles magnétiques différents.

Le premier monostable 3a est déclenché sur des fronts positifs du signal numérique D issu du capteur 2. Le second monostable 3b est déclenché sur des fronts négatifs dudit signal numérique D. Les signaux E et F issus respectivement des deux monostables 3a et 3b sont ensuite additionnés par une porte logique OU 3c qui fournit ensuite un signal de détection G.

Le dispositif permet de générer, avec 21 paires de pôles magnétiques, 42 impulsions par rotation de la couronne multipolaire 1. Le signal de détection G généré est identique tous les 60°, avec sept impulsions distantes de 7,5°, puis 15° sans impulsions.

Le signal G est destiné à un calculateur de pilotage, non représenté, de l'injection électronique qui effectue d'abord un déchiffrage du signal G, par le comptage des impulsions du signal G à l'aide d'une horloge par exemple, pour connaître la vitesse de rotation de la couronne multipolaire 1 et l'emplacement instantané des grands pôles 1a de la couronne, afin de commander les injecteurs pour les cylindres de moteur d'une manière appropriée, connue de l'homme du métier.

Ainsi, le dispositif de l'invention permet d'une part de détecter la vitesse de rotation du moteur et d'autre part d'effectuer un repérage angulaire du point mort haut de chaque cylindre du moteur grâce aux grands pôles 1a de chaque secteur de la couronne multipolaire 1.

Il est également possible d'utiliser les informations électriques issues du dispositif pour caler angulairement la pompe à injection par rapport au moteur.

Le moteur étant positionné au point mort haut d'un cylindre déterminé, l'opération de calage consiste à positionner la pompe à injection sur une valeur angulaire déterminée par rapport au moment d'injection. Par analyse simultanée du signal analogique A et du signal numérique D délivrés par le capteur 2, un automate peut identifier, en entraînant en rotation la pompe à injection, la valeur du signal analogique A correspondant soit au centre du pôle concerné (maximum) soit à la frontière entre deux pôles consécutifs (commutation du signal numérique D). Dès que l'une de ces deux valeurs est identifiée par rotation, l'automate peut asservir la pompe à injection sur une valeur angulaire reconnue.

Si l'opération est effectuée manuellement, un contrôle des signaux électriques A et D du capteur 2 permet à l'opérateur de connaître précisémment la valeur analogique correspondant au centre du pôle ou à la transition entre deux pôles magnétiques. Cette assistance permet à l'opérateur de positionner avec précision la pompe à une valeur angulaire déterminée.

## Revendications

1. Procédé de détection de la position angulaire et de la vitesse angulaire de l'axe de rotation d'une pompe à injection d'un moteur multicylindre, consistant à mesurer les variations d'un champ magnétique générées par une couronne multipolaire rigide (1) rendue solidaire autour de l'axe, à l'aide d'un capteur sensible au champ magnétique (2) monté fixe et disposé en regard du pourtour de la couronne, caractérisé en ce que la couronne comporte une pluralité de pôles magnétiques Nord et Sud répartis de façon alternée sur son pourtour, la couronne multipolaire étant subdivisée en autant de secteurs d'angle égal qu'il y a de cylindres dans le moteur, chaque secteur présentant au moins deux petits pôles (1b) consécutifs de faible étendue angulaire et un grand pôle (1a) dont l'étendue angulaire est au moins égale une fois et demie de celle d'un petit pôle.

2. Dispositif de détection relié à une pompe à injection d'un moteur multicylindre, tel qu'un moteur pour véhicule automobile, destiné notamment à mesurer la vitesse de rotation du moteur, à repérer angulairement le point mort haut correspondant à chaque cylindre du moteur et à effectuer un calage statique de la pompe à injection, le dispositif comprenant une couronne rigide (1) montée sur l'axe de rotation de la pompe ; un capteur sensible au champ magnétique (2) fixé en regard de la couronne et un calculateur de pilotage de l'injection électronique, caractérisé en ce que la couronne et le capteur sont arrangés à l'intérieur de la pompe et en ce qu'il comprend une interface électronique de traitement (3) reliée d'une part au capteur et d'autre part au calculateur de pilotage de l'injection électronique, la couronne étant constituée circonférentiellement d'une pluralité de pôles magnétiques Nord et Sud répartis de façon alternée sur tout le pourtour de la couronne et regroupés en secteurs d'angle égal, le nombre de secteurs étant égal au nombre de cylindres du moteur, chaque secteur présentant au moins deux petits pôles (lb) consécutifs et un grand pôle (1a) à une extrémité.

3. Dispositif de détection selon la revendication 2, caractérisé par le fait que tous les petits pôles magnétiques (lb) de la couronne (1) sont géométriquement identiques, et que les grands pôles magnétiques (la) dont le nombre correspond au nombre de cylindre du moteur sont géométriquement identiques et répartis de façon régulière sur le pour tour de la couronne.

4. Dispositif de détection selon la revendication 2 ou 3, caractérisé par le fait que lorsque le moteur comporte un nombre pair de cylindres, chaque secteur de la couronne présente un nombre pair de petits pôles magnétiques (1b).

5. Dispositif de détection selon la revendication 2 ou 3, caractérisé par le fait que lorsque le moteur comporte un nombre impair de cylindres, chaque secteur de la couronne présente un nombre impair de petits pôles magnétiques (1b).

6. Dispositif de détection selon l'une quelconque des revendications 2 à 5, caractérisé par le fait que le capteur (2) est un capteur à effet Hall comportant un élément sensible (2a) et un moyen électronique de mise en forme (2b) pour fournir un signal analogique (A) proportionnel au champ magnétique généré par la couronne (1) et un signal numérique (D) correspondant.

7. Dispositif de détection selon la revendication 6, caractérisé par le fait que l'interface électronique de traitement (3) comporte un monostable à front montant (3a), un monostable à front descendant (3b) et une porte logique OU (3c) dont les entrées sont reliées respectivement aux deux monostables et dont la sortie délivre un signal de détection au calculateur de pilotage de l'injection électronique, les monostable (3a, 3b) étant reliés à la sortie du signal numérique (D) du capteur (2).

## Claims

1. A method of detecting the angular position and angular speed of the rotating spindle of an injection pump of a multicylinder engine, consisting of measuring the fluctuations in a magnetic field generated by a rigid multipolar ring (1) which is rigid around the spindle, by means of a sensor which is sensitive to the magnetic field (2) and which is rigidly mounted and disposed opposite the periphery of the ring, characterised in that the ring comprises a plurality of North and South magnetic poles distributed in alternating fashion around its periphery, the multipolar ring being subdivided into as many segments of equal angle as there are cylinders in the engine, each segment having at least two small consecutive poles (1b) of minimal angular extent and a large pole (1a) the angular extent of which is at least equal to one and a half times that of a small pole.

2. A detection device connected to an injection pump of a multicylinder engine such as an engine for a motor vehicle, intended in particular for measuring the rotary speed of the engine, for angularly marking the top dead centre position corresponding to each cylinder of the engine and for performing a static adjustment of the injection pump, the device comprising a rigid ring (1) mounted on the rotary spindle of the pump; a sensor sensitive to the magnetic field (2) being fixed opposite the ring and a computer for governing the electronic injection process, characterised in that the ring and the sensor are arranged inside the pump and in that it comprises an electronic processing interface (3) connected on the one hand to the sensor and on the other to the electronic injection governing computer, the ring being constituted circumferentially by a plurality of North and South magnetic poles distributed in alternating fashion around the periphery of the ring and grouped into segments of equal angle, the number of segments being equal to the number of cylinders in the engine, each segment comprising at least two small consecutive poles (1b) and a large pole (1a) at one end.

3. A detection device according to Claim 2, characterised in that all the small magnetic poles (1b) of the ring (1) are geometrically identical and in that the large magnetic poles (1a), the number of which corresponds to the number of cylinders in the engine, are geometrically identical and are regularly distributed over the circumference of the ring.

4. A detection device according to Claim 2 or 3, characterised in that when the engine has an even number of cylinders, each segment of the ring has an even number of small magnetic poles (1b).

5. A detection device according to Claim 2 or 3, characterised in that when the engine comprises an odd number of cylinders, each segment of the ring has an odd number of small magnetic poles (1b).

6. A detection device according to any one of Claims 2 to 5, characterised in that the sensor (2) is a Hall effect sensor comprising a sensitive element (2a) and electronic shaping means (2b) for providing an analogue signal (A) proportional to the magnetic field generated by the ring (1) and a corresponding digital signal (D).

7. A detection device according to Claim 6, characterised in that the electronic processing interface (3) comprises a rising front monostable (3a), a descending front monostable (3b) and a logic OR gate (3c) the inputs of which are connected respectively to the two monostables while its output delivers a detection signal to the electronic injection controlling computer, the monostables (3a, 3b) being connected to the output of the digital signal (D) from the sensor (2).

## Patentansprüche

1. Verfahren zur Messung der Winkelposition und der Winkelgeschwindigkeit der Drehachse einer Einspritzpumpe eines Mehrzylindermotors, darin bestehend, daß die Veränderungen eines Magnetfeldes gemessen werden, die durch einen steifen mehrpoligen Kranz 1 erzeugt werden, der fest um die Achse herum angeordnet ist, mittels eines auf das Magnetfeld ansprechenden Fühlers 2, der feststeht und gegenüber dem Umfang des Kranzes angeordnet ist, dadurch gekennzeichnet, daß der Kranz eine Vielzahl von Nordpolen und Südpolen aufweist, die abwechselnd entlang des Umfangs angeordnet sind, daß der Kranz in soviele Abschnitte mit gleichem Winkel unterteilt ist, wie Zylinder im Motor vorgesehen sind, und daß jeder Abschnitt wenigstens zwei aufeinanderfolgende kleine Pole 1b geringer Winkelausdehnung und einen großen Pol 1a aufweist, dessen Winkelausdehnung wenigstens anderthalb mal so groß ist wie diejenige eines kleinen Pols.

2. Meßvorrichtung, die mit der Einspritzpumpe eines Mehrzylindermotors verbunden ist, z. B. eines Kraftfahrzeugmotors, und die insbesondere zum Messen der Motordrehzahl dient, zum winkelmäßigen Bestimmen des oberen Totpunktes für jeden Zylinder des Motors und zum Durchführen einer statischen Einstellung der Einspritzpumpe, wobei die Vorrichtung einen steifen Kranz 1 aufweist, der an der Drehachse der Pumpe befestigt ist, einen auf das Magnetfeld ansprechenden Fühler 2, der fest gegenüber dem Kranz angeordnet ist, sowie einen Steuerrechner für die elektronische Einspritzung, dadurch gekennzeichnet, daß der Kranz und der Fühler im Inneren der Pumpe angeordnet sind, und daß sie eine elektronische Datenschnittstelle 3 aufweist, die einerseits mit dem Fühler und andererseits mit dem Steuerrechner für die elektronische Einspritzung verbunden ist, wobei der Kranz in seiner Umfangsrichtung aus einer Vielzahl von magnetischen Nord- und Südpolen besteht, die abwechselnd entlang des gesamten Umfangs des Kranzes angeordnet sind, und die in Abschnitten mit gleichem Winkel zusammengefaßt sind, wobei die Anzahl der Abschnitte gleich der Anzahl der Zylinder des Motors ist und jeder Abschnitt wenigstens zwei kleine aufeinanderfolgende Pole 1b und einen großen Pol 1a an einem Ende aufweist.

3. Meßvorrichtung nach Anspruch 2, dadurch gekennzeichnet, daß alle kleinen magnetischen Pole 1b des Kranzes geometrisch identisch sind und daß die großen magnetischen Pole 1a, deren Anzahl der Anzahl der Zylinder des Motors entspricht, geometrisch identisch sind und regelmäßig entlang des Kranzumfangs verteilt sind.

4. Meßvorrichtung nach Anspruch 2 oder 3, dadurch gekennzeichnet, daß wenn der Motor eine gerade Anzahl von Zylindern enthält, jeder Abschnitt des Kranzes eine gerade Anzahl von kleinen magnetischen Polen 1b aufweist.

5. Meßvorrichtung nach Anspruch 2 oder 3, dadurch gekennzeichnet, daß wenn der Motor eine ungerade Anzahl von Zylindern enthält, jeder Abschnitt des Kranzes eine ungerade Anzahl von kleinen magnetischen Polen 1b aufweist.

6. Meßvorrichtung nach einem der Ansprüche 2 bis 5, dadurch gekennzeichnet, daß der Fühler 2 ein Hall-Effekt-Fühler ist mit einem empfindlichen Bauteil 2a und einer elektronischen Umwandlungsanordnung 2b, die ein analoges Signal A liefern, das proportional dem vom Kranz 1 erzeugten Magnetfeld ist sowie ein zugehöriges numerisches Signal D.

7. Meßvorrichtung nach Anspruch 6, dadurch gekennzeichnet, daß die elektronische Datenschnittstelle 3 eine monostabile Schaltung mit Anstiegsflanke 3a aufweist, eine monostabile Schaltung mit Abstiegsflanke 3b aufweist und eine logische ODER-Schaltung 3c aufweist, deren Eingänge mit den entsprechenden Eingängen der beiden monostabilen Schaltungen verbunden sind und deren Ausgang ein Meßsignal für den Steuerrechner der elektronischen Einspritzung liefert, wobei die monostabilen Schaltungen 3a, 3b mit dem Ausgang des Fühlers 2 für das numerische Signal D verbunden sind.
